# EUROPEAN PATENT SPECIFICATION

(11) **EP 1 841 892 B1**
(45) Date of publication and mention of the grant of the patent: **01.08.2012**
(21) Application number: 05822608.5
(22) Date of filing: 21.12.2005
(51) Int. Cl.: C22C 21/00, H01G 9/004, C25F 3/04

(54) **ALUMINUM MATERIAL FOR ELECTROLYTIC CAPACITOR ELECTRODE, PRODUCTION METHOD OF ELECTRODE MATERIAL FOR ELECTROLYTIC CAPACITOR, ANODE MATERIAL FOR ALUMINUM ELECTROLYTIC CAPACITOR, AND ALUMINUM ELECTROLYTIC CAPACITOR**
ALUMINIUMMATERIAL FÜR EINE ELEKTRODE EINES ELEKTROLYTISCHEN KONDENSATORS, VERFAHREN ZUR HERSTELLUNG VON ELEKTRODENMATERIAL FÜR EINEN ELEKTROLYTISCHEN KONDENSATOR, ANODENMATERIAL FÜR EINEN ELEKTROLYTISCHEN ALUMINIUMKONDENSATOR UND ELEKTROLYTISCHER ALUMINIUMKONDENSATOR
MATERIAU EN ALUMINIUM POUR ELECTRODE DE CONDENSATEUR ELECTROLYTIQUE, PROCEDE DE FABRICATION DU MATERIAU D'ELECTRODE DE CONDENSATUER ELECTROLYTIQUE, DU MATERIAU D'ANODE DE CONDENSATEUR ELECTROLYTIQUE EN ALUMINIUM ET DU CONDENSATEUR ELECTROLYTIQUE

(30) Priority: 21.12.2004 JP 2004369781; 31.05.2005 JP 2005160275; 07.06.2005 US 687880 P; 04.11.2005 JP 2005321354; 04.11.2005 JP 2005321360
(43) Date of publication of application: 10.10.2007
(73) Proprietor: SHOWA DENKO K.K., Tokyo 105-8518 (JP)
(72) Inventor: YOSHIDA, Katsuoki Showa Denko Sakai Aluminum K.K., Sakai-shi, Osaka 590-8576 (JP); YAMANOI, Tomoaki Showa Denko Sakai Aluminum K.K., Sakai-shi, Osaka 590-8576 (JP); MAEDA, Masao Showa Denko Sakai Aluminum K.K., Sakai-shi, Osaka 590-8576 (JP); WATANABE, Kiyoshi Showa Denko Sakai Aluminum K.K., Sakai-shi, Osaka 590-8576 (JP)
(74) Representative: Viering, Jentschura & Partner
(86) International application number: PCT/JP2005/024019
(87) International publication number: WO 2006/068300

(56) References cited:
- EP-A- 1 329 529
- JP-A- 2 051 211
- JP-A- 2 270 928
- JP-A- 5 005 145
- JP-A- 08 081 725
- JP-A- 10 154 641
- JP-A- 2002 161 322
- JP-A- 2005 179 719
- JP-A- 2005 206 883
- US-A- 4 166 755

## Description

This invention relates to an aluminum material for electrolytic capacitor electrodes, a production method of an electrode material for electrolytic capacitors, an anode material for aluminum electrolytic capacitors, and an aluminum electrolytic capacitor.

In this disclosure, the wording of "aluminium" is used to mean both aluminum and its alloy, and "aluminum material" includes at least an aluminum foil, an aluminum plate and a product thereof.

### Background Art

The following description sets forth the inventor's knowledge of related art and problems therein and should not be construed as an admission of knowledge in the prior art.

In accordance with the recent miniaturization of electronics devices, it is desired to increase the capacitance of an aluminum foil for electrolytic capacitor electrodes to be incorporated in electronics devices.

Aluminum materials for electrolytic capacitor electrodes are generally etched to increase the magnified surface area ratio to improve the capacitance. As etching pits formed by the etching become deeper and uniform in density, the magnified surface area ratio increases. Accordingly, for the purpose of improving etching suitability of an aluminum material, various processing are executed as pretreatments.

Examples of such pretreatments include adjustment of (100) crystal orientation, adjustment of composition by adding minute amounts of impurities such as Pb or Bi to aluminum material, degreasing before final annealing, hydration treatment before final annealing and crystalline oxide film forming treatment during final annealing, and oxidation treatment before final annealing (see, e.g., Japanese Examined Laid-open Patent Publication No. S58-34925 (hereinafter, Patent Document 1) and Japanese Unexamined Laid-open Patent Publication No. H03-122260 (hereinafter, Patent Document 2)).

Also proposed is a method for obtaining high capacitance by regulating contents of various elements such as Zn, Mn, Cu, Fe, Si, Ga, Pb, Mg, B, V, Ti, Zr, Ni, C and P constituting aluminum materials (see, e.g., Japanese Unexamined Laid-open Patent Publication No. H02-270928 (hereinafter, Patent Document 3) and Japanese Unexamined Laid-open Patent Publication No. H05-5145 (hereinafter, Patent Document 4)).

It is reported that an oxide film with a regulated range of saturation current density and potential at the point where the current density increases rapidly of an aluminum foil after final annealing is restricted in surface dissolution, resulting in high capacitance (see, e.g., Japanese Unexamined Laid-open Patent Publication No. H11-36032 (hereinafter, Patent Document 5)).

Further, it is reported that uniform and deep etching can be formed if an aluminum foil has a pitting potential of an inside of aluminum material: -760 to -735 mV, and pitting potential of the surface thereof: 10 to 60 mV lower than the above (see, e.g. , Japanese Unexamined Laid-open Patent Publication No. H4-143242 (hereinafter, Patent Document 6)).

However, the efforts as mentioned above fail to yield sufficient satisfaction to the recent demands of attaining high capacitance of electrolytic capacitors. Especially, as to the technique in which contents of trace elements are controlled as disclosed by Patent Documents 3 and 4, they leave much to be improved.

Furthermore, as to the regulation of the range of saturation current density and potential at the point where the current density increases rapidly as disclosed by Patent document 5, it should be noted that this technique regulates the characteristics of an oxide film forming a surface layer with no consideration of the relation to trace elements contained in aluminum member.

Furthermore, in Patent Document 6, although it is emphasized that it is important to set the pitting potential of the surface layer lower than that of the inside, it becomes important to control the inside as well as to control the surface layer since a surface layer is often removed in recent etching as a pretreatment before electrolytic etching. Therefore, the proposal was not sufficient.

Furthermore, in recent years, cost-down demands are getting important as well as demands of attaining high capacitance in etching makers. Therefore, it is desired to provide an aluminum material capable of attaining both high capacitance and low costs.

The description herein of advantages and disadvantages of various features, embodiments, methods, and apparatus disclosed in other publications is in no way intended to limit the present invention. Indeed, certain features of the invention may be capable of overcoming certain disadvantages, while still retaining some or all of the features, embodiments, methods, and apparatus disclosed therein.

Other objects and advantages of the present invention will be apparent from the following preferred embodiments.

### Disclosure of Invention

The preferred embodiments of the present invention have been developed in view of the above-mentioned and/or other problems in the related art. The preferred embodiments of the present invention can significantly improve upon existing methods and/or apparatuses.

The first object of the present invention is to provide an aluminum material for electrolytic capacitor electrodes capable of increasing capacitance by assuredly enhancing the magnified surface area ratio by uniformly generating high density deep etching pits even in cases where a number of aluminum ingots refined by a segregation process cheaper than aluminum ingots refined by a three layer electrolytic refining process are used.

The second object of the present invention is to provide a method for manufacturing an electrode material for electrolytic capacitors capable of increasing capacitance by assuredly enhancing the magnified surface area ratio by uniformly generating high density deep etching pits even in cases where a number of aluminum ingots refined by a segregation process cheaper than aluminum ingots refined by a three layer electrolytic refining process are used.

The third object of the present invention is to provide an anode material for aluminum electrolytic capacitors, capable of increasing capacitance by assuredly enhancing the magnified surface area ratio by uniformly generating high density deep etching pits even in cases where a number of aluminum ingots refined by a segregation process cheaper than aluminum ingots refined by a three layer electrolytic refining process are used.

The fourth object of the present invention is to provide an aluminum electrolytic capacitor with an electrode aluminum material capable of assuredly increasing the magnified surface area ratio by uniformly generating deep etching pits with a high density, thereby increasing capacitance.

The aforementioned objects can be attained by the following means.
(1) An annealed aluminum material for electrolytic capacitor electrodes, wherein, in an alloy composition, the aluminum material contains Ga: 0.0005 mass% or more, and wherein a ratio AGa/BGa of Ga content AGa (mass%) in a surface layer ranging from a surface to a 5 nm depth to Ga content BGa (mass%) in an inside of the aluminum material deeper than 5nm from the surface is 3 or less, and wherein a potential at the point where the current density increases rapidly E is from -765 mV vs S.C.E to -740 mV vs S.C.E,
   and
   wherein, in an aluminum composition, the aluminum material is 99.98 mass% or above in aluminum purity, and contains Zn: 0.0002 mass% or more, and wherein the Zn content CZn (mass%) and the Ga content CGa (mass%) meet a relation of 0.0056≦6CGa+7CZn≦0.0245, and
   wherein the aluminum material contains Fe: not less than 0.0008 mass% and not greater than 0.004 mass%, Si: not less than 0.0008 mass% and not greater than 0.004 mass%, Cu: not less than 0.001 mass% and not greater than 0.008 mass%, and Pb: not less than 0.00003 mass% and not greater than 0.0002 mass%, and
   wherein Ti content (mass%), Zr content (mass%) and V content (mass%) meet the relation of 0.00035≦CTi+CZr+CV≦0.0015 (wherein CTi denotes Ti content (mass%), CZr denotes Zr content (mass%), and CV denotes V content (mass%)), wherein B content is not greater than 0.0002 mass%, impurities other than Fe, Si, Cu, Ga, Zn, Pb, Ti, Zr and V are not greater than 0.001 mass% respectively, and
   wherein the aluminum material contains Zn: not less than 0.0002 mass% and less than 0.0007%.
(2) The aluminum material for electrolytic capacitor electrodes as recited in the aforementioned Item 1, wherein the aluminum material further contains Ga: not less than 0.0008 mass%.
(3) The aluminum material for electrolytic capacitor electrodes as recited in the aforementioned Item 1, wherein the aluminum material further contains Ga: not less than 0.001 mass%.
(4) A production method of an electrode material for electrolytic capacitors, characterized in that the method includes a step of performing etching to the aluminum material as recited in any one of the aforementioned Items 1 to 3.
(5) The production method of an electrode material for electrolytic capacitors as recited in the aforementioned Item 4, wherein at least a part of etching is direct current etching.
(6) An anode material for aluminum electrolytic capacitors manufactured by the production method as recited in the aforementioned Item 4 or 5.
(7) An aluminum electrolytic capacitor characterized in that the aluminum electrolytic electrode as recited in the aforementioned Item 4 or 5 is used as an electrode material.

According to the invention as recited in the aforementioned Item (1), since in an alloy composition, the aluminum material contains Ga: 0.0005 mass% or more, a ratio AGa/BGa of Ga content AGa (mass%) in a surface layer ranging from a surface to a 5 nm depth to Ga content BGa (mass%) in an inside of the aluminum material deeper than 5nm from the surface is 3 or less, and a potential at the point where the current density increases rapidly E is from -765 mV vs S.C.E to -740 mV vs S.C.E., it is possible to assuredly increase the magnified surface area ratio by uniformly generating deep etching pits with a high density to thereby increase the capacitance. Furthermore, since it contains Ga: 0.0005 mass% or more, it is possible to use a large amount of aluminum ingots refined by a segregation process cheaper than a three layer electrolytic refining process can be used, thereby attaining both demands of high capacitance and low costs.

According to the invention as recited in the aforementioned Item (1), since, in an aluminum composition, the aluminum material is 99.98 mass% or above in aluminum purity, and contains Zn: 0.0002 mass% or more, and the Zn content CZn (mass%) and the Ga content CGa (mass%) meet a relation of 0.0056≦6CGa+7CZn≦0.0245, deeper and more uniform etching pits can be formed, thereby further increasing the capacitance.

According to the invention as recited in the aforementioned Item (1), since the aluminum material contains Fe: not less than 0.0008 mass% and not greater than 0.004 mass%, Si: not less than 0.0008 mass% and not greater than 0.004 mass%, Cu: not less than 0.001 mass% and not greater than 0.008 mass%, and Pb: not less than 0.00003 mass% and not greater than 0.0002 mass%, etching pits can grow while restraining formation of uneven etchings and generation of local etchings, which can further increase the capacitance.

According to the invention as recited in the aforementioned Item (1), since Ti content CTi (mass%), Zr content CZr (mass%) and V content CV (mass%) meet the relation of 0.00035 ≦ CTi+CZr+CV ≦ 0.0015, and B content is not greater than 0.0002 mass%, impurities other than Fe, Si, Cu, Ga, Zn, Pb, Ti, Zr and V are not greater than 0.001 mass% respectively, uneven formation and/or local formation of etching pits can be prevented, resulting in increased capacitance.

According to the invention as recited in the aforementioned A Item (1), since the aluminum material contains Zn: not less than 0.0002 mass% and less than 0.0007%, increased capacitance can be attained.

According to the invention as recited in the aforementioned Item (2), since the aluminum material further contains Ga: not less than 0.0008 mass%, further increased capacitance can be attained.

According to the invention as recited in the aforementioned 3 Item (3), since the aluminum material further contains Ga: not less than 0.0010 mass%, further increased capacitance can be attained.

According to the invention as recited in the aforementioned Item (4), an electrode material for electrolytic capacitors with larger capacitance can be manufactured by etching.

According to the invention as recited in the aforementioned Item (5), when at least a part of etching is performed by direct current etching, a number of deep and thick tunnel-like pits can be formed, which makes it possible to effectively exert the aforementioned effects due to the regulation of the aluminum compositions.

According to the invention as recited in the aforementioned Item (6), it becomes possible to attain an anode material for aluminum electrolytic capacitors with high capacitance.

According to the invention as recited in the aforementioned Item (7), it becomes possible to attain an anode material for aluminum electrolytic capacitors with high capacitance.

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims.

### Brief Description of Drawings

The preferred embodiments of the present invention are shown by way of example, and not limitation, in the accompanying figure, in which:

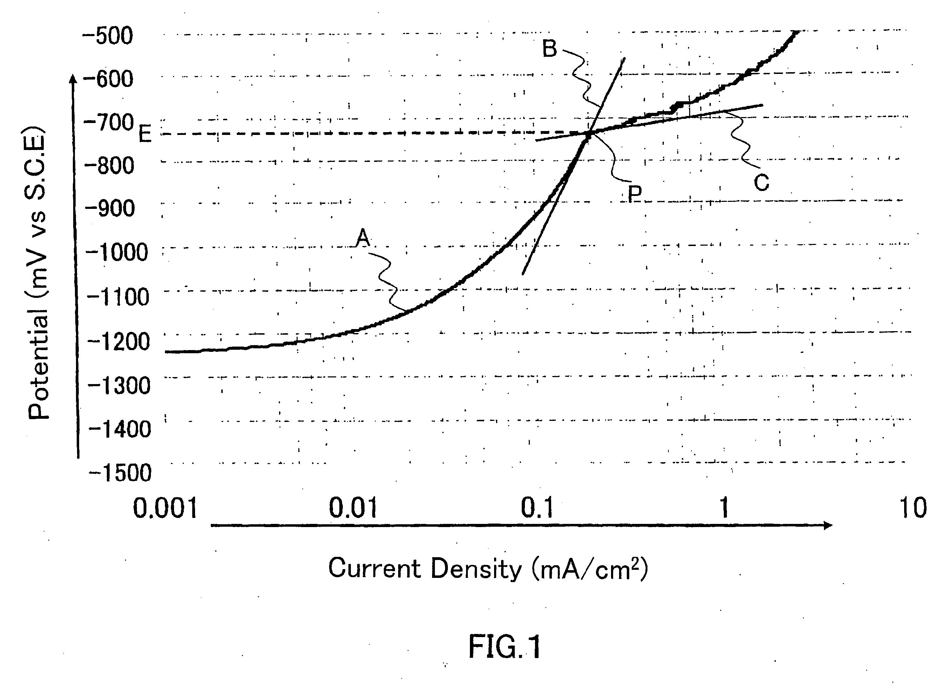

Fig. 1 is a graph showing a potential-current density curve for obtaining a potential at the point where the current density increases rapidly.

### Best Mode for Carrying Out the Invention

In the following paragraphs, some preferred embodiments of the invention will be described by way of example and not limitation. It should be understood based on this disclosure that various other modifications can be made by those in the art based on these illustrated embodiments.

In an aluminum material for electrolytic capacitance electrodes, the meanings of adding each element constituting the composition of the aluminum material, limiting the content thereof and limiting the properties thereof will be explained as follows.

The reasons of limiting such that, in an alloy composition, the aluminum material contains Ga: 0.0005 mass% or more, and wherein a ratio AGa/BGa of Ga content AGa (mass%) in a surface layer ranging from a surface to a 5 nm depth to Ga content BGa (mass%) in an inside of the aluminum material deeper than 5nm from the surface is 3 or less, and wherein a potential at the point where the current density increases rapidly E is from -765 mV vs S.C.E to -740 mV vs S.C.E, are as follows.

That is, it is necessary to contain Ga 0.0005 mass% or more since Ga solid solves in an aluminum material and can contribute to uniform forming of etching pits at the first stage etching. If it is less than 0.0005 mass%, this effect is not adequate and there is an disadvantage in terms of refining costs. However, as the Ga content increases, the potential at the point where the current density increases rapidly E moves toward a higher potential. As a result, if the ratio AGa/BGa of Ga content AGa (mass%) of the surface layer to Ga content BGa (mass%) of the inside of the material exceeds 3 and the Ga content of the surface layer concentrates, the potential becomes excessively higher at the surface layer, which prevents generation of pits at the first stage etching, resulting in uneven etching. Accordingly, it is necessary to set the ratio AGa/BGa of Ga content AGa (mass%) of the surface layer to Ga content BGa (mass%) of the inside of the material 3 or less.

In the case of Pb which is well known that Pb enhances etching pit generation of an aluminum foil for electrolytic capacitors to increase the surface area, Pb will be concentrated in the surface layer (layer from the surface to 5 nm depth) by about 1000 times to exert the surface area expanding effect. However, in the case of Ga, it will not be concentrated in the surface layer, but contributes to uniform forming of etching pits by being solid solved in the inside of the aluminum although the improving effects is not so great as compared with Pb.

In the case of refining with a segregation process, the refining efficiency is not high since Ga is large especially in equilibrium distribution coefficient. Considering the economical view point, it is preferable that the Ga content is 0.0008 mass% or more, and the optimal content is 0.001 mass% or more.

Furthermore, as to the current sudden increase potential E, when it becomes lower than -770 mV vs S.C.E, the dissolubility of the material itself becomes excessive, and therefore it is not preferable. If Ga concentrates in the surface layer of the aluminum material, Ga becomes poor inside the aluminum material, which makes the potential at the point where the current density increases rapidly E lower. Accordingly, in order to control the ratio of Ga content of the surface layer to Ga content of the inside of the material deeper than 5nm from the surface to be 3 or less, it is necessary to hold the aluminum material at a high temperature of 520 °C or higher for 4 hours or more since it is greatly affected by the final annealing conditions. If the potential at the point where the current density increases rapidly E becomes higher than -710 mV, uniform generation of etching pits will be prevented, and therefore it is not preferable. The preferable range of potential at the point where the current density increases rapidly E is from -765 mV to -740 mV.

The aluminum material is 99.98 mass% or above in aluminum purity. If it is less than 99.98 mass%, since the amount of impurities are large, the etching characteristic deteriorates due to the excessive resolution of the aluminum material during the etching even if the amount of the trace additive elements is regulated

In the alloy composition, the Zn content is 0.0002 mass% or more. From the economical view point, it is not effective to regulate the Zn content below 0.0002 mass% due to the increased refining costs.

Zn has the characteristics that it concentrates at the surface layer by about 5 times after the final annealing and is liable to segregate at the grain boundary. Accordingly, the range of Zn content is not less than 0.0002 mass% and less than 0.0007 mass%.

In addition to the regulation of the respective contents of Zn and Ga, it is required to meet the relation of 0.0056≦6CGa+7CZn≦0.0245, where "CZn" denotes the Zn content (mass%) and "CGa" denotes the Ga content (mass%). The Ga and Zn in an aluminum material solid solves in the aluminum matrix to increase the dissolubility of the aluminum material at the second stage etching, enhancing the surface expanding effects of etched pits, which in turn increases the capacitance. This effect becomes insufficient when 6CGa+7CZn is smaller than 0.0056. When 6CGa+7CZn becomes greater than 0.0245, excessive dissolution may be occurred, and therefore it is not preferable. The preferable range is 0.0056≦6CGa+7CZn≦0.0210, and the optimal range is 0.0056≦6CGa+7CZn≦0.0189.

In the chemical composition of the aluminum material, Si has an effect of preventing grains from abnormally coarsening during the recrystalization. If the content is less than 0.0008 mass%, the effect becomes poor. If it exceeds 0.004 mass%, the distribution of etching pits may become uneven. Therefore, it is preferable to regulate the Si content so as to fall within the range of from 0.0008 to 0.004 mass%. The more preferable upper limit of the Si content is 0.003 mass%.

Fe is an element inevitably contained in aluminum. If a large amount of Fe is contained, Al-Fe system precipitates will be formed depending on the final annealing temperatures, which may cause uneven formation of etching pits. If the Fe content exceeds 0.004 mass%, Al-Fe system precipitates may easily be formed. On the other hand, regulating the Fe amount to less than 0.0008 mass% is not preferable in view of the expensive refining costs, and therefore it is not preferable to regulate it so as to fall within the limit of from 0.0008 to 0.004 mass%. The more preferable upper range of the Fe content is 0.003 mass%.

When solid solved in the aluminum matrix, Cu increases the dissolubility of the aluminum material to enhance the growth of etching pit, thereby increasing the capacitance. If the Cu content is less than 0.001 mass%, the effect is poor. To the contrary, if it exceeds 0.008 mass%, the dissolubility of the aluminummaterial becomes excessive, which may prevent the etching characteristics. Accordingly, it is preferable to regulate the Cu content so as to fall within the range of from 0.001 to 0.008 mass%. The preferable lower limit of the Cu content is 0.003 mass%, and the preferable upper limit thereof is 0.007 mass%.

Pb will concentrate at the foil surface during the final annealing to cause uniform generation of etching pits in the initial etching stage to thereby prevent local generation of etching pits. If the Pb content is less than 0.00003 mass%, the effect is poor. To the contrary, if it exceeds 0.0002 mass%, the dissolution of the aluminum surface becomes vigorous, which deteriorates the capacitance. Accordingly, the content is preferably from 0.00003 mass% to 0.0002 mass%. The more preferable lower limit of the Pb content is 0.00004 mass%, and the more preferable upper limit thereof is 0.00015 mass%.

As to Ti, Zr and V, it is preferable that the Ti content CTi (mass%), the Zr content CZr (mass%) and the V content CV (mass%) meet the relation of 0.00035≦CTi+CZr+CV≦0.0015. Peritectic elements such as Ti, Zr and V are elements whose contents increase when refined ingot obtained by a segregation process. These elements easily form intermetallic compounds with aluminum. The total content exceeding 0.0015 mass% may cause uneven formation of etching pits due to the precipitation. It is not preferable to regulate the total content to be less than 0.00035 mass% from the view of the expensive refining costs. The preferable upper limit of the total content is 0.0011 mass%.

The B content is preferably set to 0.0002 mass% or less. The B content is preferably as small as possible since local generation of etching pits may be generated when B forms compounds with Ti, Zr and V. The preferable upper limit is 0.0001 mass%.

As to impurities other than Fe, Si, Cu, Ga, Zn, Pb, Ti, Zr and V, it is preferable that each content is 0.001 mass% or less. If each content exceeds 0.001 mass%, it is not preferable since the dissolubility of the aluminum becomes excessive.

The production method of an aluminum material for electrolytic capacitor electrodes according to the present invention is not specifically limited so long as it is a method capable of manufacturing an aluminum material, wherein, in an alloy composition, the aluminum material contains Ga: 0.0005 mass% or more, and wherein a ratio AGa/BGa of Ga content AGa (mass%) in a surface layer ranging from a surface to a 5 nm depth to Ga content BGa (mass%) in an inside of the aluminum material deeper than 5nm from the surface is 3 or less, and wherein a potential at the point where the current density increases rapidly E is from -765 mV vs S.C.E to -740 mV vs S.C.E.

As an example, it is effective to employ a continuous casting rolling method in which aluminum molten alloy is continuously inserted in between two cooling rolls to obtain a sheet-like ingot. With this method, the ingot can be cast at the cooling rate of 1 x 10³ °C/sec or above, decreasing the segregation of Ga in the ingot greatly, which makes it possible to disperse Ga uniformly. This easily causes Ga to uniformly disperse at the final annealing, resulting in less segregation to the foil surface. The thickness of the continuous cast rolled member is preferably not less than 5 mm but not greater than 25 mm. If the ingot is thin, the degree of the cold processing becomes insufficient, resulting in low cubic orientation occupancy ratio which is important when an aluminum material is subjected to direct current etching. The cold rolling, intermediate annealing and final annealing after the continuous cast rolling can be performed by a common method. Depending on the case, homogenization treatment and hot rolling can be performed after the continuous cast rolling to increase the cubic orientation occupancy ratio of the final aluminum material.

The refining of the aluminum ingot is preferably performed by an economical segregation process. Even if an aluminum ingot refined by a segregation process, which is cheaper than an aluminum ingot refined by a three layer electrolytic refining process, is used in a large amount, uniform and high density deep etching pits can be formed. This assuredly increases the magnified surface area increase ratio, enabling increased capacitance, which in turn can attain both high capacitance and low cost.

The thickness of an aluminum member is not specifically limited. In the present invention, an aluminum member with a thickness of 200 µm or less called a foil and an aluminum member with a thickness thicker than the above can be used.

The aluminum material according to the present invention is subjected to etching to improve the magnified surface area ratio and used as an electrode material for electrolytic capacitors. Although the etching conditions are not specifically limited, it is preferable to employ a direct-current etching. The direct-current etching causes deep and thick etching at the portions where nucleation sites for pits are formed by the annealing, resulting in a number of tunnel-like pits, which realizes high capacitance.

After the etching, it is preferable to subject it to formation of the dielectric to thereby obtain an anode material which is especially preferable to be used as an anode material for medium voltage or high voltage electrolytic capacitors. However, it should be noted that the material can also be used as a cathode material. An electrolytic capacitor using the electrode material can attain high capacitance.

### EXAMPLES

Concrete examples will be explained as follows.

In manufacturing an aluminum material, initially, aluminum alloys with compounds shown in Table 1 were subjected to band-like members each having a thickness of 20 mm. Then, these members were homogenized under the condition of 600°C x 5 hours. From this temperature, each member was hot rolled by one pass at the rolling reduction: 75%, and cooled with water immediately after the rolling. Thereafter, each member was rolled into a foil with a thickness of 100 µm via cold rolling, intermediate annealing. After the degreasing, each member was subjected to final annealing in Ar atmosphere under the conditions shown in Table 2.

As to each foil obtained as mentioned above, the ratio AGa/BGa of the Ga content AGa of the surface layer to the Ga content BGa of the inside of the foil and the potential at the point where the current density increases rapidly E at the time of measuring the polarization were measured.

The Ga content in the region (surface layer) ranging from one side of the foil to the 5 nm depth was measured as follows.

First, a test piece of 50 cm² was obtained from a test material. The test piece was immersed in 0.02 mass%-NaOH aqueous solution of 50 °C to dissolve the surface layer (ranging from the surface to a 5 nm depth). The test piece was further washed with 1.3 mol/l-nitric acid aqueous solution, and the washing liquid was mixed with the NaOH aqueous solution. The quantitative determination of the dissolved thickness was performed by measuring the Al dissolved amount with a plasma emission spectrometry: Further, by subjecting the solution liquid to ICP-MS (inductively coupled plasma mass spectrometry), the Ga amount in the surface layer was measured. The Ga content in the inside of the test piece was measured with GDMS (glow-discharge mass spectrometry) after immersing the test piece in the 1 mol/l-HCl aqueous solution for 15 minutes, then in 1 mass%-HF for 30 seconds, drying at 80 °C after water washing with ion-exchanged water. Based on the measured results, the ratio AGa/BGa of the Ga content of the surface layer to the Ga content of the inside of the test piece was calculated. The calculated results are shown in Table 2.

The potential at the point where the current density increases rapidly E was measured by the following method.

First, the test piece was immersed in 5 mass%-NaOH aqueous solution of 50°C for 30 seconds, washed with water, immersed in 30 mass%-HNO₃ aqueous solution for 60 seconds, then washed with ion-exchange water. Immediately after this treatment, the aluminum foil was immersed in 2.67 mass%-AlCl₃ aqueous solution of 40°C for 5 minutes, wherein the solution was in advance sufficiently deairred by supplying N₂ gas at the rate of 100 ml/min for 30 minutes or more. Thereafter, a potential-current curve was obtained by performing anodic polarization at a potential sweep rate of 20 mV/min from the natural electrode potential to the higher potential. In the measuring, platinum electrodes were used as counter electrode, and saturated calomel electrodes (S.C.E.) were used as reference electrodes. The potential at the point where the current density increases rapidly E was obtained as follows.
1) The potential-current density curve A was obtained (Fig. 1)
2) In this potential-current density curve A, a straight line B showing the minimum change of rate of the current density (mA/cm²) in the range of potential not lower than -900 mV vs S.C.E and not higher than -600 mV vs S.C.E. was obtained, i.e., the tangent line was made at the position showing the minimum change of rate.
3) In this potential-current density curve A, a straight line C showing the maximum change of rate of the current density (mA/cm²) in the range of potential not lower than 900 mV vs S.C.E and not higher than - 600 mV vs S.C.E. was obtained, i.e., the tangent line was made at the position showing the maximum change of rate.
4) From the P obtained as the intersection of the lines (B) and (C), the potential E corresponding to P was obtained as the potential at the point where the current density increases rapidly.

Each of the measured results of the potential at the point where the current density increases rapidly obtained as mentioned above is shown in Table 2.

Etching was performed by the following method.

The aluminum member was immersed in a solution of 75 °C containing HCl: 1 mol/l and H₂SO₄: 3.5 mol/l, and then subjected to electrolytic treatment. After the electrolytic treatment, the aluminum member was further immersed in the aforementioned hydrochloric acid-sulfuric acid mixed solution of 90°C for 600 seconds to thereby obtain an etched aluminummaterial. The obtained aluminum material was subjected to formation of the dielectric at the voltage of 270V in accordance with EIAJ standard to obtain an anode material, and the capacitance thereof was measured. The results are shown in Table 2 as relative comparison when it is assumed that the capacitance of the comparative example No. 1 is 100%.

**Table 1**

| | | Chemical Composition (by mass%, balance: Al) | | | | | | | | | | | |
|---|---|---|---|---|---|---|---|---|---|---|---|---|---|
| | | Zn | Ga | 6CGa+7CZn | Si | Fe | Cu | Pb | Ti | Zr | V | Ti+Zr+V | B |
| | 1 | 0.0001 | 0.001 | 0.0067 | 0.002 | 0.0015 | 0.006 | 0.00006 | 0.0001 | 0.0002 | 0.0002 | 0.0005 | 0.0001 |
| | 2 | 0.0002 | 0.001 | 0.0074 | 0.002 | 0.0015 | 0.006 | 0.00006 | 0.0001 | 0.0002 | 0.0002 | 0.0005 | 0.0002 |
| | 3 | 0.0003 | 0.001 | 0.0081 | 0.002 | 0.0015 | 0.006 | 0.00006 | 0.0001 | 0.0002 | 0.0002 | 0.0005 | 0.0001 |
| | *4 | 0.001 | 0.001 | 0.013 | 0.002 | 0.0015 | 0.006 | 0.00006 | 0.0001 | 0.0002 | 0.0002 | 0.0005 | 0.0001 |
| | 5 | 0.0003 | 0.0007 | 0.0063 | 0.002 | 0.0016 | 0.006 | 0.00006 | 0.0001 | 0.0002 | 0.0002 | 0.0005 | 0.0001 |
| | 6 | 0.0006 | 0.0015 | 0.0132 | 0.0018 | 0.0016 | 0.0059 | 0.00006 | 0.0001 | 0.0002 | 0.0002 | 0.0005 | 0.0002 |
| | 7 | 0.0005 | 0.0012 | 0.0107 | 0.0021 | 0.0015 | 0.006 | 0.00006 | 0.0001 | 0.0002 | 0.0002 | 0.0005 | 0.0001 |
| | *8 | 0.0019 | 0.0017 | 0.0235 | 0.002 | 0.0014 | 0.004 | 0.00006 | 0.0001 | 0.0002 | 0.0002 | 0.0005 | 0.0001 |
| Example | *9 | 0.0015 | 0.0015 | 0.0195 | 0.0022 | 0.0015 | 0.0041 | 0.00006 | 0.0001 | 0.0002 | 0.0002 | 0.0005 | 0.0001 |
| | *10 | 0.0012 | 0.0013 | 0.0162 | 0.002 | 0.0017 | 0.004 | 0.00006 | 0.0001 | 0.0002 | 0.0002 | 0.0005 | 0.0001 |
| | *11 | 0.0008 | 0.0027 | 0.0218 | 0.0018 | 0.0015 | 0.0059 | 0.00006 | 0.0001 | 0.0002 | 0.0002 | 0.0005 | 0.0001 |
| | *12 | 0.0009 | 0.0025 | 0.0213 | 0.0019 | 0.0015 | 0.006 | 0.00006 | 0.0001 | 0.0002 | 0.0002 | 0.0005 | 0.0001 |
| | 13 | 0.0006 | 0.002 | 0.0162 | 0.002 | 0.0014 | 0.006 | 0.00006 | 0.0001 | 0.0002 | 0.0002 | 0.0005 | 0.0001 |
| | *14 | 0.0027 | 0.0006 | 0.0225 | 0.0019 | 0.0016 | 0.006 | 0.00006 | 0.0001 | 0.0002 | 0.0002 | 0.0005 | 0.0001 |
| | *15 | 0.0018 | 0.0007 | 0.0168 | 0.002 | 0.0015 | 0.0062 | 0.00006 | 0.0001 | 0.0002 | 0.0002 | 0.0005 | 0.0001 |
| | 16 | 0.0007 | 0.001 | 0.0109 | 0.0009 | 0.0015 | 0.0059 | 0.00006 | 0.0001 | 0.0002 | 0.0002 | 0.0005 | 0.0002 |
| | 17 | 0.0006 | 0.001 | 0.0102 | 0.0037 | 0.0015 | 0.0059 | 0.00006 | 0.0001 | 0.0002 | 0.0002 | 0.0005 | 0.0001 |
| | 18 | 0.0006 | 0.0009 | 0.0096 | 0.002 | 0.0011 | 0.006 | 0.00006 | 0.0001 | 0.0002 | 0.0002 | 0.0005 | 0.0001 |
| | 19 | 0.0005 | 0.001 | 0.0095 | 0.002 | 0.0037 | 0.0061 | 0.00006 | 0.0001 | 0.0002 | 0.0002 | 0.0005 | 0.0002 |
| | 20 | 0.0006 | 0.0011 | 0.0108 | 0.002 | 0.0015 | 0.0012 | 0.00006 | 0.0001 | 0.0002 | 0.0002 | 0.0005 | 0.0001 |
| | 21 | 0.0006 | 0.001 | 0.0102 | 0.002 | 0.0015 | 0.0074 | 0.00006 | 0.0001 | 0.0002 | 0.0002 | 0.0005 | 0.0001 |
| | 22 | 0.0007 | 0.001 | 0.0109 | 0.002 | 0.0015 | 0.006 | 0.00004 | 0.0001 | 0.0002 | 0.0002 | 0.0005 | 0.0001 |
| | 23 | 0.0005 | 0.001 | 0.0095 | 0.002 | 0.0015 | 0.006 | 0.00016 | 0.0001 | 0.0002 | 0.0002 | 0.0005 | 0.0002 |
| | 24 | 0.0006 | 0.001 | 0.0102 | 0.002 | 0.0015 | 0.006 | 0.00006 | 0.0002 | 0.0003 | 0.0003 | 0.0008 | 0.0001 |
| | 25 | 0.0006 | 0.001 | 0.0102 | 0.002 | 0.0015 | 0.006 | 0.00006 | 0.0002 | 0.0005 | 0.0006 | 0.0013 | 0.0001 |
| Comparatve Example | 1 | 0.0005 | 0.001 | 0.0095 | 0.002 | 0.0015 | 0.006 | 0.00006 | 0.0001 | 0.0002 | 0.0002 | 0.0005 | 0.0001 |
| | 2 | 0.0004 | 0.0035 | 0.0238 | 0.002 | 0.0016 | 0.006 | 0.00019 | 0.0001 | 0.0002 | 0.0002 | 0.0005 | 0.0001 |

| | | | | | | | | | | | | | |
|---|---|---|---|---|---|---|---|---|---|---|---|---|---|
| * comparative examples | | | | | | | | | | | | | |

**Table 2**

| | | AGa/BGa | Current Density Sudden Increase Potential (mV vs S.C.E) | Final Annealing Conditions | Capacitance (%) |
|---|---|---|---|---|---|
| Example | 1 | 1.3 | -758 | 540°C × 8hours | 110 |
| | 2 | 1.4 | -758 | | 110 |
| | 3 | 1.5 | -759 | | 111 |
| | *4 | 1.9 | -756 | | 108 |
| | 5 | 2.2 | -761 | | 109 |
| | 6 | 1.7 | -751 | | 111 |
| | 7 | 1.5 | -753 | | 110 |
| | *8 | 1.4 | -758 | | 103 |
| | *9 | 1.5 | -758 | | 105 |
| | *10 | 1.6 | -758 | | 107 |
| | *11 | 1 | -719 | | 103 |
| | *12 | 1.1 | -724 | | 106 |
| | 13 | 1 | -743 | | 109 |
| | *14 | 2 | -768 | | 104 |
| | *15 | 2.5 | -764 | | 107 |
| | 16 | 1.5 | -755 | | 108 |
| | 17 | 1.4 | -758 | | 111 |
| | 18 | 1.8 | -756 | | 111 |
| | 19 | 1.6 | -757 | | 109 |
| | 20 | 1.9 | -760 | | 109 |
| | 21 | 2.1 | -753 | | 111 |
| | 22 | 1.5 | -758 | | 108 |
| | 23 | 1.7 | -757 | | 109 |
| | 24 | 1.6 | -755 | | 110 |
| | 25 | 1.9 | -754 | | 111 |
| Comparative Example | 1 | 3.5 | -773 | 470°C × 4hours | 100 |
| | 2 | 1.3 | -705 | 540°C × 8hours | 96 |

| | | | | | |
|---|---|---|---|---|---|
| * comparative examples | | | | | |

From the results shown in Table 2, it was confirmed that Examples 1 to 3, 5 to 7, 13 and 16 to 25 whose ratio AGa/BGa of Ga content in the surface layer to Ga content of the inside of the material, the potential at the point where the current density increases rapidly E at the time of measuring the polarization, and the composition of the aluminum material fall within the range of the present invention could increase the capacitance as compared with Comparative

Examples 1-2, 4, 8-12 and 14-15 falling outside the range of the present invention.

### Industrial Applicability

As mentioned above, the aluminum material for electrolytic capacitor electrodes, an anode material for aluminum electrolytic capacitors, an aluminum electrolytic capacitor, and an electrode material for electrolytic capacitors manufactured by the production method of electrode material for electrolytic capacitors are excellent in capacitance, and can be employed in various products including electric products.

In this disclosure, the following abbreviated terminology may be employed: "e.g." which means "for example;" and "NB" which means "note well."

## Claims

1. An annealed aluminum material for electrolytic capacitor electrodes, wherein, in an alloy composition, the annealed aluminum material is 99.98 mass% or above in purity and contains Ga: 0.0005 mass% or more, Zn: 0.0002 mass% or more, wherein the Zn content CZn (mass%) and the Ga content CGa (mass%) meet a relation of 0.0056 ≤ 6CGa + 7CZn ≤ 0.0245, wherein the annealed aluminum material contains Fe: not less than 0.0008 mass% and not greater than 0.004 mass%, Si: not less than 0.0008 mass% and not greater than 0.004 mass%, Cu: not less than 0.001 mass% and not greater than 0.008 mass%, and Pb: not less than 0.00003 mass% and not greater than 0.0002 mass%,
**characterized in that**
the ratio AGa/BGa of Ga content AGa (mass%) in a surface layer ranging from a surface to a 5 nm depth to Ga content BGa (mass%) in an inside of the annealed aluminum material deeper than 5 nm from the surface is 3 or less, wherein the range of potential at the point where the current density increases rapidly E is from -765 mV vs S.C.E to -740 mV vs S.C.E; the annealed aluminum material contains Zn: not less than 0.0002 mass% and less than 0.0007%; the Ti content (mass%), Zr content (mass%) and V content (mass%) meet the relation of 0.00035 ≤ CTi + CZr + CV ≤ 0.0015 (wherein CTi denotes Ti content (mass%), CZr denotes Zr content (mass%), and CV denotes V content (mass%)); the B content is not greater than 0.0002 mass%; impurities other than Fe, Si, Cu, Ga, Zn, Pb, Ti, Zr and V are not greater than 0.001 mass%; and the balance is aluminum.

2. The annealed aluminum material for electrolytic capacitor electrodes as recited in claim 1, wherein the annealed aluminum material further contains Ga: not less than 0.0008 mass%.

3. The annealed aluminum material for electrolytic capacitor electrodes as recited in claim 1, wherein the annealed aluminum material further contains Ga: not less than 0.001 mass%.

4. A production method of an electrode material for electrolytic capacitors, **characterized in that** the method includes a step of performing etching to the annealed aluminum material as recited in any one of claims 1 to 3.

5. The production method of an electrode material for electrolytic capacitors as recited in claim 4, wherein at least a part of etching is direct current etching.

6. An anode material for aluminum electrolytic capacitors manufactured by the production method as recited in claim 4 or 5.

7. An aluminum electrolytic capacitor **characterized in that** the aluminum electrolytic electrode as recited in claim 4 or 5 is used as an electrode material.

## Patentansprüche

1. Ein geglühtes Aluminiummaterial für Elektrolytkondensatorelektroden, wobei in einer Legierungszusammensetzung das geglühte Aluminiummaterial eine Reinheit von 99.98 Gew.% oder mehr besitzt und Ga: 0.0005 Gew.% oder mehr, Zn: 0.0002 Gew.% oder mehr, wobei der Zn Gehalt CZn (Gew.%) und der Ga Gehalt CGa (Gew.%) ein Verhältnis von 0.0056 ≤ 6CGa + 7CZn ≤ 0.0245 einhalten, enthält, wobei das geglühte Aluminiummaterial Fe: nicht weniger als 0.0008 Gew.% und nicht mehr als 0.004 Gew.%, Si : nicht weniger als 0.0008 Gew.% und nicht mehr als 0.004 Gew.%, Cu: nicht weniger als 0.001 Gew.% und nicht mehr als 0.008 Gew.% und Pb: nicht weniger als 0.00003 Gew.% und nicht mehr als 0.0002 Gew.% enthält,
**dadurch gekennzeichnet, dass**
das Verhältnis AGa/BGa des Ga Gehalts AGa (Gew.%) in einer Oberflächenschicht, die von der Oberfläche bis zu einer Tiefe von 5 nm reicht, zu dem Ga Gehalt BGa (Gew.%) im Innern des ausgeglühten Aluminiummaterials, tiefer als 5 nm von der Oberfläche, 3 oder weniger ist, wobei der Potenzialbereich an dem Punkt E, an dem die Stromdichte plötzlich ansteigt, von - 765 mV gegenüber einer gesättigten Kalomel-Elektrode (vs. S.C.E) bis -740 mV gegenüber einer gesättigten Kalomel-Elektrode (vs. S.C.E) reicht; das geglühte Aluminiummaterial Zn: nicht weniger als 0.0002 Gew.% und weniger als 0.0007 Gew.% enthält; der Ti Gehalt(Gew.%), Zr Gehalt(Gew.%) und V Gehalt (Gew.%) das Verhältnis von 0.00035 ≤ CTi + CZr + CV ≤ 0.0015 erfüllen (wobei CTi den Ti Gehalt (Gew.%) bezeichnet, CZr den Zr Gehalt (Gew.%) bezeichnet und CV den V Gehalt (Gew.%) bezeichnet); der B Gehalt nicht größer als 0.0002 Gew.% ist; Verunreinigungen außer Fe, Si, Cu, Ga, Zn, Pb, Ti, Zr, und V nicht größer als 0.001 Gew.% sind; und der Rest Aluminium ist.

2. Das geglühte Aluminiummaterial für elektrolytische Kondensatorelektroden wie in Anspruch 1 dargelegt, wobei das geglühte Aluminiummaterial ferner Ga: nicht weniger als 0.0008 Gew.% enthält.

3. Das geglühte Aluminiummaterial für Elektrolytkondensatorelektroden wie in Anspruch 1 dargelegt, wobei das geglühte Aluminiummaterial ferner Ga: nicht weniger als 0.001 Gew.% enthält.

4. Ein Verfahren zur Herstellung eines Elektrodenmaterials für Elektrolytkondensatoren, **dadurch gekennzeichnet, dass** das Verfahren einen Schritt des Ätzens des geglühten Aluminiummaterials, wie in einem der Ansprüche 1 bis 3 dargelegt, einschließt.

5. Das Verfahren zur Herstellung eines Elektrodenmaterials für Elektrolytkondensatoren wie in Anspruch 4 dargelegt, wobei mindestens ein Teil des Ätzens Gleichstromätzen ist.

6. Ein Anodenmaterial für Aluminium-Elektrolytkondensatoren, hergestellt durch das Herstellungsverfahren wie in Anspruch 4 oder 5 dargelegt.

7. Ein Aluminium-Elektrolytkondensator, **dadurch gekennzeichnet, dass** die Aluminium-Elektrolytelektrode wie in Anspruch 4 oder 5 dargelegt als ein Elektrodenmaterial verwendet wird.

## Revendications

1. Matériau en aluminium recuit pour des électrodes de condensateur électrolytique, dans lequel, dans une composition d'alliage, le matériau en aluminium recuit a une pureté de 99,98 % en masse ou plus et contient du Ga : 0,0005 % en masse ou plus, du Zn : 0,0002 % en masse ou plus, dans lequel la teneur en Zn CZn (% en masse) et la teneur en Ga CGa (% en masse) satisfont à une relation 0,0056 ≤ 6CGa + 7CZn ≤ 0,0245, dans lequel le matériau en aluminium recuit contient du Fe : pas moins de 0,0008 % en masse et pas plus de 0,004 % en masse, du Si : pas moins de 0,0008 % en masse et pas plus de 0,004 % en masse, du Cu : pas moins de 0,001 % en masse et pas plus de 0,008 % en masse, et du Pb : pas moins de 0,00003 % en masse et pas plus de 0,0002 % en masse
**caractérisé en ce que**
le rapport AGa/BGa entre la teneur en Ga AGa (% en masse) dans une couche superficielle s'étendant d'une surface jusqu'à une profondeur de 5 nm et la teneur en Ga BGa (% en masse) à l'intérieur du matériau en aluminium recuit à une profondeur supérieure à 5 nm de la surface est de 3 ou moins, dans lequel la plage de potentiel au point auquel la densité de courant augmente rapidement E est de -765 mV en fonction de S.C.E à -740 mV en fonction de S.C.E ; le matériau en aluminium recuit contient du Zn : pas moins de 0,0002 % en masse et moins de 0,0007 % ; la teneur en Ti (% en masse), la teneur en Zr (% en masse) et la teneur en V (% en masse) satisfont à la relation 0,00035 ≤ CTi + CZr + CV ≤ 0,0015 (où CTi désigne la teneur en Ti (% en masse), CZr désigne la teneur en Zr (% en masse), et CV désigne la teneur en V (% en masse)) ; la teneur en B n'est pas supérieure à 0,0002 % en masse ; les impuretés autres que le Fe, Si, Cu, Ga, Zn, Pb, Ti, Zr et V sont inférieures ou égales à 0,001 % en masse ; et le reste est de l'aluminium.

2. Matériau en aluminium recuit pour des électrodes de condensateur électrolytique selon la revendication 1, lequel matériau en aluminium recuit contient en outre du Ga supérieur ou égal à 0,0008 % en masse.

3. Matériau en aluminium recuit pour des électrodes de condensateur électrolytique selon la revendication 1, lequel matériau en aluminium recuit contient en outre du Ga supérieur ou égal à 0,001 % en masse.

4. Procédé de production d'un matériau d'électrode pour des condensateurs électrolytiques, **caractérisé en ce que** le procédé comprend une étape d'exécution d'une gravure du matériau en aluminium recuit selon l'une quelconque des revendications 1 à 3.

5. Procédé de production d'un matériau d'électrode pour des condensateurs électrolytiques selon la revendication 4, dans lequel au moins une partie de gravure est une gravure en courant continu.

6. Matériau d'anode pour des condensateurs électrolytiques en aluminium fabriqués grâce au procédé de production selon la revendication 4 ou 5.

7. Condensateur électrolytique en aluminium **caractérisé en ce que** l'électrode électrolytique en aluminium selon la revendication 4 ou 5 est utilisée en tant que matériau d'électrode.
